# EUROPÄISCHE PATENTANMELDUNG

(11) **EP 1 055 553 A2**
(43) Veröffentlichungstag der Anmeldung: **29.11.2000**
(21) Anmeldenummer: 00109841.7
(22) Anmeldetag: 10.05.2000
(51) Int. Cl.: B60N 2/48

(54) **Aktive Kopfstütze für Kraftfahrzeugsitze**

(30) Priorität: 27.05.1999 DE 19924236
(71) Anmelder: ISE Innomotive Systems Europe GmbH, 51702 Bergneustadt (DE)
(72) Erfinder: Menne, Hans Gerd, 51702 Bergneustadt (DE); Steffens, Martin, 57489 Drolshagen (DE); Klause, Reiner, 51674 Wiehl (DE)
(74) Vertreter: Fuchs Mehler Weiss & Fritzsche

(57) **Zusammenfassung**

Derartige Kopfstützen weisen typischerweise eine Vorrichtung auf, die einen Heckaufprall erfaßt, in Verbindung mit einer Mechanik, die die Kopfstütze bei dem Heckaufprall selbsttätig nach vorne verlagen. Um insbesondere die Auslösung der Mechanik unabhängig von Körpergröße, Gewicht und Sitzposition des Fahrzeuginsassen zu machen, ist die Kopfstütze (1) drehbeweglich im Rückenlehnen-Gestell (9) integriert und wird mittels einer Feder (10) vorgespannt, in Verbindung mit einer Arretierung (12, 13, 14, 15 a, b), die die Kopfstütze im vorgespannten Zustand hält. Mit der Arretierung ist ein Auslöser (15) gekoppelt, der mit einem den Heckaufprall verbundenen Sensor verbunden ist, der bei Aktivierung die Arretierung löst, so daß die vorgespannte Feder (10) die Kopfstütze (1) nach vorne, dem Kopf des Insassen entgegen, verschwenkt.

Eine lösbare mechanische Verriegelung (17, 18) verhindert ein Zurückfedern der Kopfstütze (1).

## Beschreibung

Die Erfindung bezieht sich auf eine aktive Kopfstütze für Kraftfahrzeug-Sitze, mit einer Vorrichtung, die einen Heckaufprall auf das Fahrzeug erläßt und einer mit dieser Vorrichtung und der Kopfstüze gekoppelten Mechanik, mittels der die in die Rückenlehne integrierte Kopfstütze bei dem Heckaufprall nach vorne verlagerbar ist.

Zum Schutz der Insassen von Fahrzeugen gegen den sogenannten "Peitschenschlag-Effekt" bei einem Heckaufprall sind die Fahrzeugsitze mit einer Kopfstütze versehen, die in der Regel sowohl in ihrer Höhe als auch hinsichtlich ihrer Neigung, d.h. hinsichtlich des Abstandes zu dem Kopf des Fahrzeuginsassen, verstellbar sind. Häufig sind jedoch diese Kopfstützen fälsch eingestellt bzw. die Einstellung, die sich betrieblich verändert, wird nicht mit der genügenden Aufmerksamkeit korrigiert. Die Folge davon ist ein weitgehender Verlust der Sicherheitsfunktion der Kopfstütze mit der Gefahr eines Schleudertraumas aufgrund des Peitschenschlag-Effektes, d.h. des Zurückschleuderns des Kopfes bei einem Aufprall eines nachfolgenden Fahrzeuges auf das Heck.

Um diese Nachteile zu vermeiden, ist es bekannt (Automobil-Entwicklung, März 1999, Seite 12), die Vordersitze eines Personenkraftwagens mit einer aktiven Kopfstütze zu versehen, die bei einer Heck-Kollision den Peitschenschlag-Effekt und damit die Gefahr eines Schleudertraumas verringert.

Grundlage des Systems ist eine Mechanik, mittels derer die Kopfstütze über einen Hebel mit einer Druckaufnahme-Vorrichtung im Inneren der Rückenlehne verbunden ist. Im Fall eines Aufpralles von hinten beschleunigt das Fahrzeug samt Sitz in Vorwärtsrichtung, was dazu führt, daß die Fahrzeuginsassen in den Sitz gedrückt werden. Dadurch wird ein großer Teil der Rückenlehne durch das Gewicht der Körper der Insassen eingedrückt. Diese Krafteinwirkung der Körper beim Heck-Aufprall aktiviert dabei die Druckaufnahme-Vorrichtung, die nach hinten gedrückt wird, und über den Hebel eine kombinierte Auf-/Vorwärtsbewegung der an einem Hebelarm befestigten Kopfstütze bewirkt.

Durch das Nachvorneschieben der Kopfstütze verringert sich der Abstand zum Kopf des jeweiligen Fahrzeuginsassen. Die Köpfe der Fahrzeuginsassen können so beim Zurückschlagen durch einen Heckaufprall früher abgefängen und die Belastung der Halswirbelsäulen und damit die Auswirkungen eines Schleudertraumas dadurch reduziert werden.

Neben dem Model "Opel Vectra", bei dem die vorgenannte aktive Kopfstütze vorgesehen ist, weist auch das Modell Saab 9 - 5 ein vergleichbares mechanisches System zur aktiven Verstellung der Kopfstütze bei einem Heckaufprall auf.

Trotz des Fortschrittes, die diese Systeme mit sich bringen, weisen sie noch eine Reihe von Nachteilen auf:
- Die Auslösegeschwindigkeit sowie der Auslöse- und Verfährweg der Kopfstütze ist durch die Auslegung des Hebelsystems fest vorgegeben und nicht einstellbar Dadurch ist u.a. für jeden PKW-Typ eine andere Auslegung des mechanischen Systems notwendig.
- Die Auslösung ist von der Aufprallgeschwindigkeit und von dem Gewicht des jeweiligen Insassen abhängig. Daher sind insbesondere bei kleinen Aufprallgeschwindigkeiten leichtere Personen gefährdeter als schwerere Insassen.
- Die Funktion des mechanischen Hebelsystems ist abhängig von der Sitzposition des jeweiligen Insassen. Kleine Insassen bzw. solche, die typbedingt während der Fahrt relativ weit entfernt von der Rückenlehne sitzen, sind daher gefährdeter als große Insassen, die angelehnt an der Rückenlehne sitzen.
- Die Kopfstütze ist nicht gegen Zurückfedern gesichert.

Der Erfindung liegt die Aufgabe zugrunde, die eingangs bezeichnete aktive Kopfstütze für Kraftfährzeug-Sitze, mit einer Vorrichtung, die einen Heckaufprall auf das Fahrzeug erfaßt und einer mit dieser Vorrichtung und der Kopfstütze gekoppelten Mechanik, mittels der die in die Rückenlehne integrierte Kopfstütze bei dem Heckaufprall nach vorne verlagerbar ist, so auszubilden, daß die Auslösebedingungen einstellbar sind und nicht vom Gewicht oder von der Sitzposition der Fahrzeuginsassen abhängig sind.

Die Lösung dieser Aufgabe gelingt gemäß der Erfindung dadurch, daß die Kopfstütze drehbeweglich um eine horizontale Achse im Gestell der Rückenlehne des Sitzes integriert ist und eine mit der Kopfstütze im Wirkeingriff stehende Federanordnung in Verbindung mit einer lösbaren mechanischen Arretierung vorgesehen ist, derart, daß die Kopfstütze im normalen betrieblichen Zustand federvorbelastet gegen eine Bewegung nach vorne arretiert ist, daß eine lösbare mechanische Verriegelungsanordnung zum Verriegeln der Kopfstütze gegen eine Bewegung nach hinten und daß ein sensorgesteuertes Auslösesystem vorgesehen ist, das einerseits mit einem den Heckaufprall erfassenden Sensor verbunden ist und andererseits mit der Arretierung im Wirkeingriff steht, derart, daß beim Ansprechen des Sensors die Arretierung lösbar ist.

Die erfindungsgemäße aktive Kopfstütze weist eine Reihe von Vorteilen auf:
- Durch die Auslegung der Federanordnung ist die Auslösegeschwindigkeit flexibel und kann eingerichtet werden.
- Der Auslöse- und Verfahrweg ist durch eine entsprechende konstruktive Gestaltung variabel und von der Konstruktion her festlegbar
- Die Auslösung ist nicht von Aufprallgeschwindigkeit oder vom Gewicht des Insassen abhängig.
- Die Funktion der Aktivierung ist unabhängig von Sitzposition der Inassen.
- Die Kopfstütze wird durch die Verriegelung automatisch gegen Zurückfedern gesichert, und zwar sowohl in der Endposition als auch in beliebig stufigen Zwischenpositionen.
- Die Aktivierung kann mit anderen Sicherheitsbauteilen (Airbag, Gurtstraffer,...) gekoppelt werden, weil dort ebenfalls auf Beschleunigungen ansprechende Sensoren eingesetzt werden.
- Die Vorwärtsbewegung der Kopfstütze kann gedämpft werden.

Für die Ausbildung der Arretierung stehen dem Fachmann eine Reihe von konstruktiven Möglichkeiten zur Verfügung. Eine besonders einfache und wirksame Arretierung läßt sich gemäß einer Weiterbildung der Erfindung erzielen, wenn als Arretierung ein gelenkig miteinander verbundenes Doppelhebelsystem vorgesehen ist, von dem ein Hebel einarmig ausgebildet und mit der Kopfstütze gekoppelt ist und von dem der andere Hebel zweiarmig ausgebildet, drehbeweglich gelagert und federvorgespannt ist, und mit dem freien Hebelarm im Auslösesystem lösbar mechanisch arretiert ist.

Auch für das sensorgesteuerte Auslösesystem sind eine Reihe von Ausbildungen denkbar. Eine bevorzugte, weil mit konventionellen Komponenten realisierbare Ausbildung ist gemäß einer Ausgestaltung der Erfindung erzielbar, wenn als sensorgesteuertes Auslösesystem ein elektromagnetischer Aktuator vorgesehen ist, der mit einem ein elektrisches Signal abgebenden Sensor verbunden ist und dessen Wirkglied mit der Arretierung gekoppelt ist.

Es ist auch eine Ausbildung gemäß einer anderen Ausgestaltung der Erfindung denkbar, bei der ein mechanischer Sensor vorgesehen ist, der über mechanische Verbindungsglieder wie Hebel, Seile, Züge mit einem mechanischen Auslösesystem für die Arretierung gekoppelt ist.

Dabei wird der mechanische Sensor vorzugsweise durch eine in der Rückenlehne integrierte Druckplatte gebildet.

Für die Vorspannung der Kopfstütze stehen dem Fachmann eine Reihe von konstruktiven Möglichkeiten zur Verfügung. Eine besonders vorteilhafte, weil konstruktiv einfache und dennoch wirksame, Lösung läßt sich gemäß einer Weiterbildung der Erfindung erzielen, wenn die Federanordnung zur Vorspannung der Kopfstütze im normalen betrieblichen Zustand durch mindestens eine Drehfeder gebildet ist, die auf einer Welle, die die horizontale Schwenkachse für die Kopfstütze vorgibt, gehalten ist.

Die lösbare, d.h. reversierbar mechanische Verriegelung zum Verhindern eines Verschwenkens der Kopfstütze nach hinten wird gemäß einer vorteilhaften Ausgestaltung der Erfindung vorzugsweise durch ein mit der Kopfstütze gekoppeltes Zahnsegment in Verbindung mit einem fahrzeugfest angebrachten Sperrstift oder einer entsprechenden Sperrklinke gebildet. Dadurch ist mit einfächen Mitteln eine sichere reversierbare Sperre gewährleistet.

Kopfstützen weisen typischerweise zwei Verstellrohre auf, die in Lagerhülsen verschiebbar geführt sind. Um die Kopfstütze als aktive Kopfstütze auszubilden, ist die Konstruktion vorzugsweise gemäß einer Weiterbildung der Erfindung so getroffen, daß die Lagerhülsen integraler Bestandteil einer rechteckigen Wippe sind, die über eine Welle drehbeweglich im Gestell der Rückenlehne gehalten ist und an der die Koppelstellen für die Arretierung und die Verriegelung ausgebildet sind. Diese Konstruktion kann auf relativ einfache Weise realisiert werden und erlaubt eine sichere Betriebsweise, die den üblichen Sicherheitsstandards genügt.

Weitere ausgestaltende Merkmale der Erfindung ergeben sich anhand der Beschreibung eines in den Zeichnungen dargestellten Ausführungsbeispieles.

Es zeigen:
- Fig. 1: in einer perspektivischen Darstellung die Integration einer vorteilhaften Ausführungsform der erfindungsgemäßen aktiven Kopfstütze in das Rückenlehnen-Gestell eines Kraftfahrzeug-Sitzes,
- Fig. 2: einen mittigen Längsschnitt durch die aktive Kopfstütze nach Fig. 1,
- Fig. 3: einen vergrößerten Ausschnitt aus dem Längsschnitt nach Fig. 2 unter Darstellung der lösbaren Arretierung für die, durch eine Drehfeder vorgespannte, Kopfstütze sowie der Verriegelung der Kopfstütze gegen eine Verschwenkung nach hinten,
- Fig. 4: in einer perspektivischen Ausschnitt-Darstellung die Anordnung des Auslösesystems an dem Kopfstützen-Gehäuse,
- Fig. 5: zwei Schnitt-Darstellungen entsprechend Fig. 3, mit der vorgespannten Kopfstütze im Figurenteil A und der ausgelösten Kopfstütze im Figurenteil B, und
- Fig. 6: in zwei überlagerten perspektivischen Darstellungen analog Fig. 1 die vorgespannte und die ausgelöste Kopfstütze.

Die Zeichnung zeigt in verschiedenen Ansichten und Darstellungsarten ein bevorzugtes Ausführungsbeispiel der Erfindung, ohne daß diese darauf beschränkt wäre.

Eine auf übliche Weise aufgepolsterte Kopfstütze 1 weist zwei Verstellrohre 2 auf, die jeweils in einer Lagerhülse 3 verschiebbar geführt sind. Klemmringe 4 in Verbindung mit geschlitzten oberen Enden der Lagerhülsen sorgen dabei in konventioneller Weise für einen reibbehafteten Sitz der Verstellrohre 2.

Beide Verstellrohre 2 sind integraler Teil einer rechteckförmig ausgebildeten Wippe 5, die aus Gewichts- und Festigkeitsgründen strahlenkranzartig strukturiert ist. An der rückwärtigen Seite der Wippe 5 sind oben Lager 6 für eine Welle 7 angebracht, die mit ihren beiden Enden in Halterungen 8 am Gestell 9 der Rückenlehne eines Kraftfährzeug-Sitzes drehbeweglich gehalten ist. Um die durch diese Welle 7 vorgegebene Achse ist daher die Kopfstütze 1 mit ihren Verstellrohren 2 und der zugehörigen Wippe 5 um eine horizontale Achse drehbeweglich im Gestell 9 der Rückenlehne integriert.

Auf der Welle 7 sitzt koaxial an beiden Enden jeweils eine Drehfeder 10, die sich jeweils mit ihrem einen Ende 10 a an einem Fortsatz 5 a der Wippe 5 und mit ihrem anderen Ende 10 b an einem mit dem Gestell 9 fest verbundenen Gehäuse 11 federvorgespannt abstützt. Der Drehsinn der Drehfeder ist dabei so, daß die Vorspannung die Kopfstütze 1 nach vorne zu verdrehen versucht.

Durch eine lösbare mechanische Arretierung, die im folgenden beschrieben wird, wird die Kopfstütze 1 im normalen betrieblichen Zustand federvorgespannt für eine Bewegung nach vorne arretiert. Die Arretierung umfaßt zunächst einen Verstellhebel 12, der mit einem Ende in einem Lagerfortsatz 5 b am unteren Steg der Wippe 5 angelenkt und der mit dem anderen Ende mit einem Auslösehebel 13 drehbeweglich verbunden ist. Der Auslösehebel 13 ist um eine Achse 13 a drehbeweglich an dem Gehäuse 11, vorgespannt durch einen Spanndraht 14, angelenkt. Die Vorspannung durch den Spanndraht 14 ist dabei so gerichtet, daß sie bei Freigabe des Auslösehebels 13 diesen im Uhrzeigersinn verdreht.

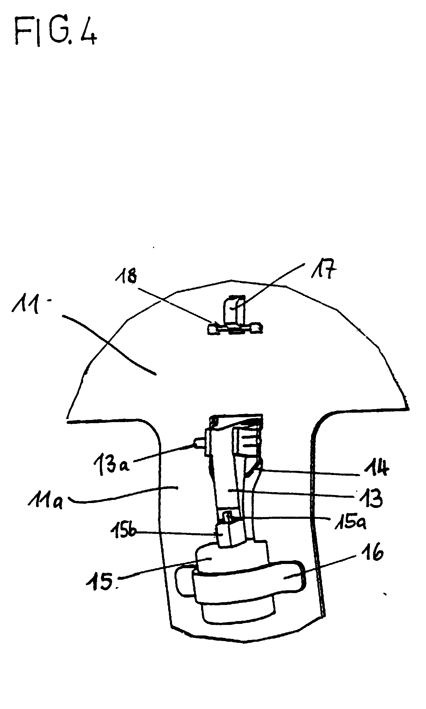

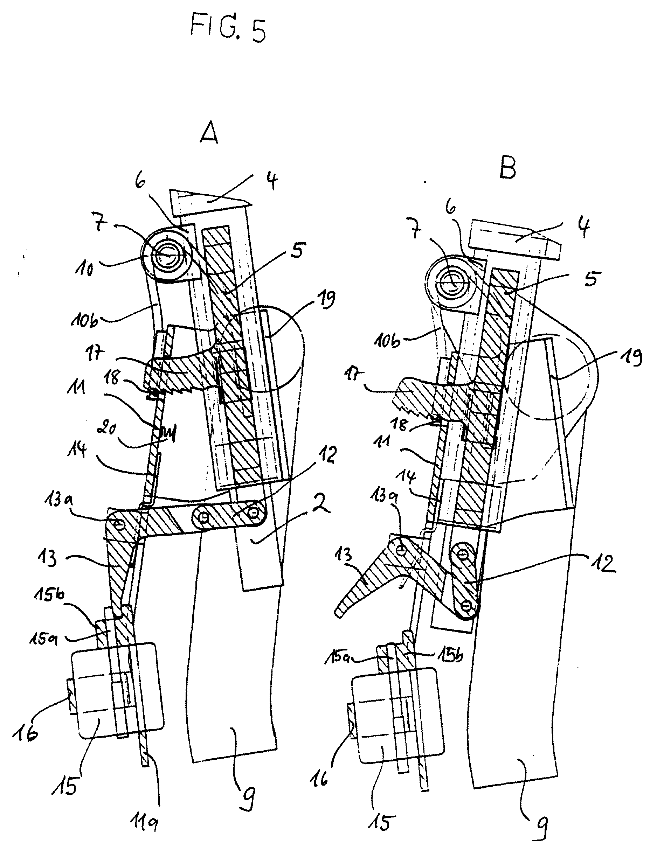

Das Gehäuse 11 besitzt, wie insbesondere aus der Fig. 4 hervorgeht, einen unteren Fortsatz 11 a, auf dem ein Auslösemagnet 15 mit einem beweglichen, metallischen Stift 15 a, der bei Aktivierung des Auslösemagneten eingezogen wird, und einem Arretierkopf 15 b, mittels einer Halterung 16 fest angebracht ist. Im normalen Betriebszustand (Fig. 5 A) ist dabei der untere Arm des Auslösehebels 13 im Arretierkopf 15 b mittels des Stiftes 15 a arretiert.

Zum Verriegeln der Kopfstütze 1 gegen eine Bewegung nach hinten ist eine mechanische Verriegelungsanordnung vorgesehen, die im Ausführungsbeispiel durch einen Zahnsegmentfortsatz 17 an der Wippe 5 in Verbindung mit einem Sperrstift 18, der verschiebbar in dem Gehäuse 11 gelagert ist, gebildet ist. Im normalen Betriebszustand (Fig. 5 A), begrenzt durch den Anschlag 19, rastet der Sperrstift 18 in der äußersten linken Zahnlücke ein. Bei einer Schwenkbewegung der Kopfstütze 1 nach Freigabe des Auslösehebels 13 (Fig. 5 B) "ratscht" das Zahnsegment über den Sperrstift hinweg, bis die Wippe an der Gehäusewand des Gehäuses 11, die insoweit als Begrenzung dient, anschlägt. Sowohl in dieser Stellung als auch in sämtlichen Zwischenstellungen ist die Kopfstütze 1 gegen ein Verschwenken nach hinten verriegelt, da sofort der Sperrstift in die nächste Zahnlücke einrasten würde. Durch ein vorübergehendes Verschieben des Sperrstiftes kann nach einer Auslösung die Kopfstütze 1 in die ursprüngliche Lage zurückgeschwenkt, d.h. reversiert werden. Die Kopfstütze wird zweckmäßig mit einem Dämpfer versehen, welche die Vorwärtsbewegung der Kopfstütze nach ihrer Auslösung dämpft bzw. verzögert unter Verringerung der Aufprallgeschwindigkeit der Wippe 5 an den Anschlag 11. Der Dämpfer kann aus einem elastisch verformbaren Material, z.B. PU-Schaum, einem Gummielement, einem Luftpolster, oder ähnlichen Gebilden bestehen. Auch die Anordnung einer Druckfeder 20 am Anschlag 11 gemäß Fig. 5 A ist denkbar.

Die erfindungsgemäße Kopfstütze arbeitet wie folgt:

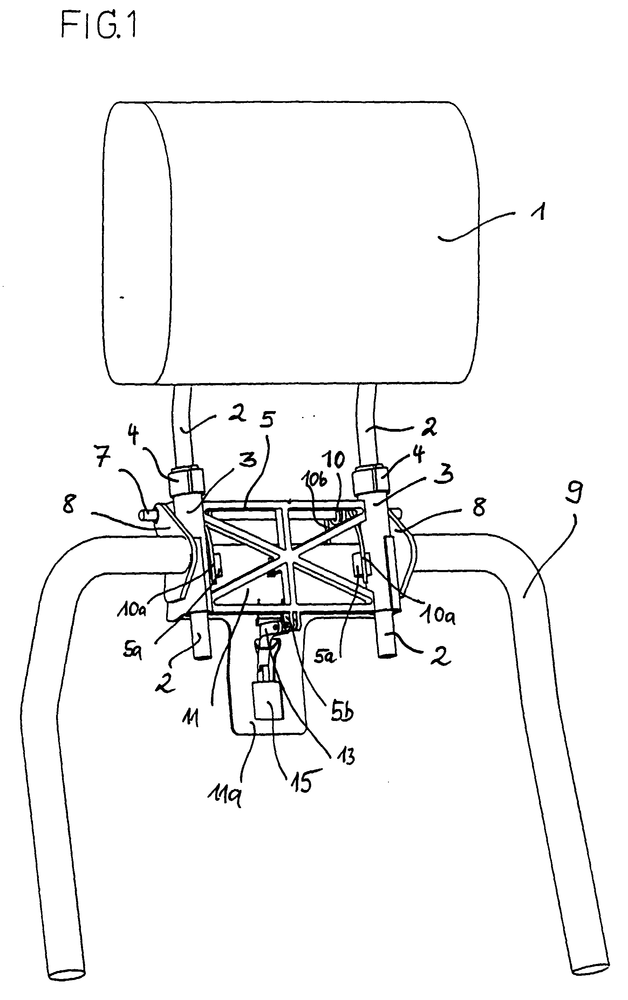

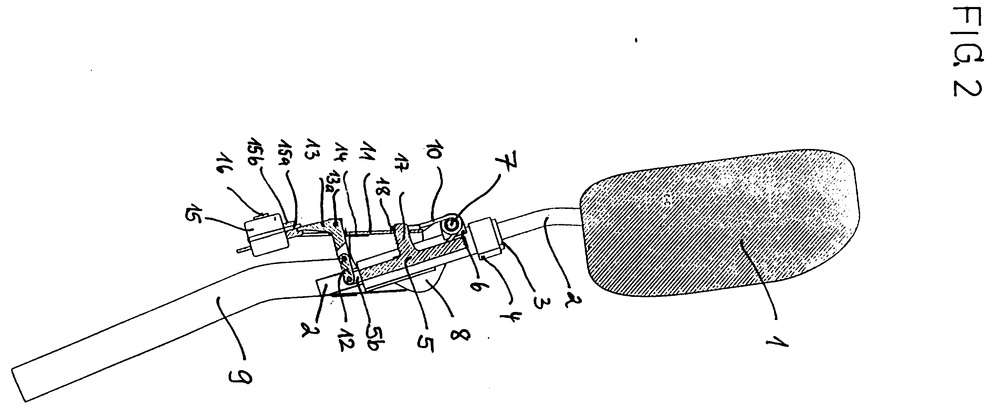

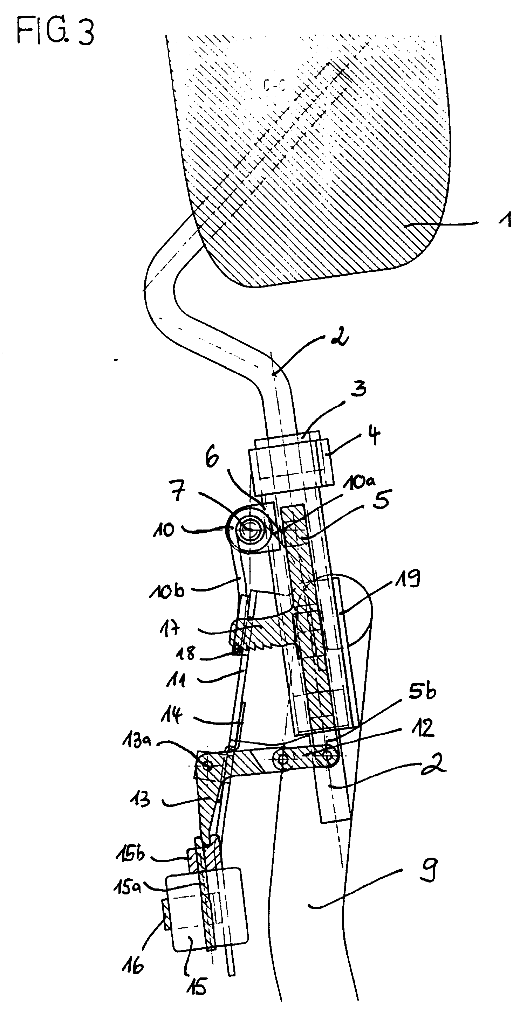

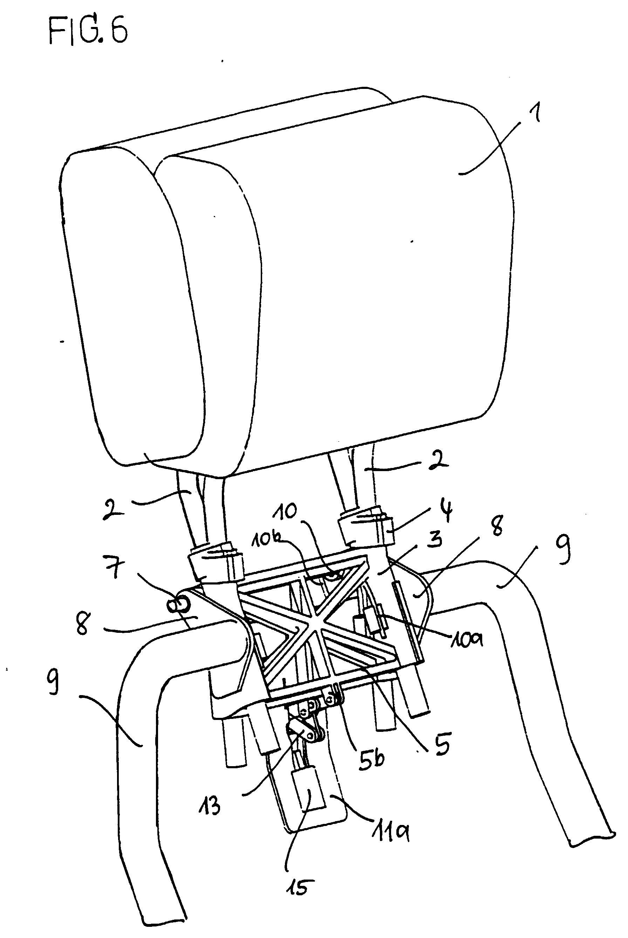

In der betrieblichen Normalposition (Figuren 1, 2, 3 und 5 A) ist die mechanische Arretierung aktiviert und hält die Kopfstütze 1 gegen die Kraft der beiden vorgespannten Drehfedern 10 in Position. Stellt ein nicht dargestellter konventioneller Sensor einen Heckaufprall fest, aktiviert er den Auslösemagneten 15, der daraufhin den Stift 15 a einzieht. Dadurch wird der Auslösehebel 13 freigegeben, der durch die Vorspannkraft des Spanndrahtes 14 im Uhrzeigersinn verdreht wird. Dadurch verdreht sich der Verstellhebel 12 nach unten und die Drehfedern 10 können die Wippe 5 im Uhrzeigersinn um die Achse 7 verschwenken, so daß die Kopfstütze 1 nach vorne, dem Kopf des Insassen entgegen, bewegt wird. Dieser Zustand ist in Fig. 5 B dargestellt, in Verbindung mit Fig. 6, die die relative Verstellbewegung zeigt.

Der Sensor kann durch einen auf Beschleunigungen ansprechenden Fühler gebildet werden, der, ähnlich wie bei der Auslösung eines Airbags, bei einem bestimmten Beschleunigungswert ein elektrisches Signal abgibt, welches das elektromagnetische Auslösesystem, den Crashmagneten 15, aktiviert und den Auslösehebel freigibt.

Der Sensor kann auch ein in dem Fahrzeugsitz integrierter Drucksensor sein, der bei einer auf ihn ausgeübten vorbestimmten Kraft einen elektrischen Impuls abgibt, der den Auslösemagneten 15 aktiviert.

Neben diesen elektrischen Sensoren kann auch ein mechanischer Sensor vorgesehen sein, der beispielsweise durch eine im Fahrzeug-Sitz integrierte flächige Druckplatte gebildet wird, die über Hebel, Seile, Züge oder dergleichen mit der Arretierung des Auslösehebels im lösbaren Wirkeingriff steht.

Anstelle der Arretierung der Wippe 5 mittels des gelenkig miteinander verbundenen Doppel-Hebelsystems 12, 13, 14 können auch andere bekannte lösbare Arretierungen vorgesehen werden, die im Auslösefall ein Verschwenken der Kopfstütze gewährleisten.

Anstelle der beiden Drehfedern 10 kann auf der Welle 7 auch eine einzige durchgehende Drehfeder verwendet werden. Auch andere Federtypen, beispielsweise Torsionsfedern, Drehstabfedern oder dergleichen sind anwendbar.

Wenngleich die mechanische Verriegelung über das Zahnsegment 17 und den Sperrstift 18, der auch durch eine Sperrklinke ersetzbar ist, eine bevorzugte Ausführungsförm darstellt, sind auch andere mechanische Verriegelungssysteme, die ein Zurückfedern der Kopfstütze 1 verhindern, anwendbar.

## Patentansprüche

1. Aktive Kopfstütze für Kraftfährzeug-Sitze, mit einer Vorrichtung, die einen Heckaufprall auf das Fahrzeug erläßt und einer mit dieser Vorrichtung und der Kopfstütze gekoppelten Mechanik, mittels der die in die Rückenlehne integrierte Kopfstütze bei dem Heckaufprall nach vorne verlagerbar ist, **dadurch gekennzeichnet,** daß die Kopfstütze (1) drehbeweglich um eine horizontale Achse im Gestell (9) der Rückenlehne des Sitzes integriert ist und eine mit der Kopfstütze (1) im Wirkeingriff stehende Federanordnung (10) in Verbindung mit einer lösbaren mechanischen Arretierung (12, 13, 14, 15 a, b) vorgesehen ist, derart, daß die Kopfstütze (1) im normalen betrieblichen Zustand federvorbelastet gegen eine Bewegung nach vorne arretiert ist, daß eine lösbare mechanische Verriegelungsanordnung (17, 18) zum Verriegeln der Kopfstütze (1) gegen eine Bewegung nach hinten und daß ein sensorgesteuertes Auslösesystem (15) vorgesehen ist, das einerseits mit einem den Heckaufprall erfässenden Sensor verbunden ist und andererseits mit der Arretierung (12, 13, 14, 15 a, b) im Wirkeingriff steht, derart, daß beim Ansprechen des Sensors die Arretierung lösbar ist.

2. Kopfstütze nach Anspruch 1, **dadurch gekennzeichnet,** daß als Arretierung ein gelenkig miteinander verbundenes Doppelhebelsystem (12, 13) vorgesehen ist, von dem ein Hebel (12) einarmig ausgebildet und mit der Kopfstütze (1) gekoppelt ist und von dem der andere Hebel (13) zweiarmig ausgebildet, drehbeweglich gelagert und federvorgespannt ist, und mit dem freien Hebelarm im Auslösesystem (15) lösbar mechanisch arretiert ist.

3. Kopfstütze nach Anspruch 1 oder 2, **dadurch gekennzeichnet,** daß als sensorgesteuertes Auslösesystem (15) ein elektromagnetischer Aktuator (15) vorgesehen ist, der mit einem ein elektrisches Signal abgebenden Sensor verbunden ist und dessen Wirkglied (15 a, b) mit der Arretierung (12, 13, 14) gekoppelt ist.

4. Kopfstütze nach Anspruch 1 oder 2, **dadurch gekennzeichnet,** daß ein mechanischer Sensor vorgesehen ist, der über mechanische Verbindungsglieder wie Hebel, Seile, Züge mit einem mechanischen Auslösesystem für die Arretierung gekoppelt ist.

5. Kopfstütze nach Anspruch 4, **dadurch gekennzeichnet,** daß der mechanische Sensor eine in der Rückenlehne integrierte Druckplatte ist.

6. Kopfstütze nach einem der Ansprüche 1 bis 5, **dadurch gekennzeichnet,** daß Federanordnung (10) zur Vorspannung der Kopfstütze (1) im normalen betrieblichen Zustand durch mindestens eine Drehtfeder gebildet ist, die auf einer Welle (7), die die horizontale Schwenkachse für die Kopfstütze vorgibt, gehalten ist.

7. Kopfstütze nach einem der Ansprüche 1 bis 6, **dadurch gekennzeichnet,** daß die lösbare mechanische Verriegelung ein mit der Kopfstütze (1) gekoppeltes Zahnsegment (17) in Verbindung mit einem fahrzeugfest angebrachten Sperrstift (18) oder einer entsprechenden Sperrklinke aufweist.

8. Kopfstütze nach einem der Ansprüche 1 bis 7, mit einer Kopfstütze (1), die Verstellrohre (2) aufweist, die in Lagerhülsen (3) verschiebbar geführt sind, **dadurch gekennzeichnet,** daß die Lagerhülsen (3) integraler Bestandteil einer rechteckigen Wippe (5) sind, die über eine Welle (7) drehbeweglich im Gestell (9) der Rückenlehne gehalten ist und an der die Koppelstellen (5 a) für die Arretierung (12, 13, 14) und die Verriegelung (17, 18) ausgebildet sind.
